# EUROPEAN PATENT SPECIFICATION

(11) **EP 2 611 305 B1**
(45) Date of publication and mention of the grant of the patent: **09.11.2016**
(21) Application number: 10749806.5
(22) Date of filing: 31.08.2010
(51) Int. Cl.: A23C 11/06, A23L 2/66, A23J 3/18

(54) **WHEAT PROTEIN BASED VEGETABLE MILK COMPOSITION**
AUF WEIZENPROTEIN BASIERENDE PFLANZENMILCHZUSAMMENSETZUNG
COMPOSITION DE LAIT VÉGÉTAL À BASE DE PROTÉINES DE BLÉ

(43) Date of publication of application: 10.07.2013
(73) Proprietor: SYRAL Belgium NV, 9300 Aalst (BE)
(72) Inventor: FLAMBEAU, Michel, F-67390 Marckolsheim (FR); LEJEUNE, Marjorie, F-67390 Marckolsheim (FR); REDL, Andreas, F-67390 Marckolsheim (FR)
(74) Representative: Chielens, Kristof
(86) International application number: PCT/EP2010/005328
(87) International publication number: WO 2012/028159

(56) References cited:
- EP-A1- 1 969 950
- WO-A1-00/48474
- DATABASE WPI Week 198132 Thomson Scientific, London, GB; AN 1981-58333D XP002637941, "Milk substitute for young farm animals - contg. skimmed milk powder, fermented gluten and maize extract hydrolysate, premix, fat and phosphatide concentrate", & SU 782 792 B (AGRIC ANIMALS PHYSIOLOGY) 30 November 1980 (1980-11-30)

## Description

The invention relates to stable milk compositions based on wheat gluten. The invention further relates to a method for preparing such stable compositions.

Due to a growing intolerance toward cow's milk, a growing interest in non-dairy milk substitutes is observed in the market. Soya-based milks have become quite popular, and also other non-dairy vegetable milk compositions can be found on the market. Typical examples of such vegetable milk compositions are almond, rice, quinoa, hazelnut and oat based milks.

Typical methods for preparing such plant milks consist in milling the substrate and, when needed, removing solid materials. Several methods for preparing soya milk have been disclosed in the prior art (e.g. EP334057, EP521331, US4241100, US4885185). US4894242 and WO2007011685 disclose processes for preparing rice milk and WO9604800 pertains to a method for preparing almond milk. Compared to cow's milk, these compositions do not contain lactose or cholesterol. On the other hand, when consuming such plant based milks, problems may arise due to the presence of specific allergens and/or because of taste problems and/or because of stability issues (Hydrocolloids, 2003, p.671-678).

Apart from the above cited vegetable milk compositions, also wheat based milk substitutes have been described in the patent and technical literature.

Already in 1913 an artificial milk composition based on wheat gluten is described in GB18382. Thereby wet wheat gluten, freshly extracted from wheat flour, is dispersed in a slightly alkaline medium. To this dispersion sugar is added and the mixture is heated to a temperature of about 70-100°C Fat is then emulsified into this base liquid under very energetic mechanical treatment. In a preferred embodiment the emulsification is performed at about 100°C, thereby providing a sterilised milk substitute. Because of the high temperatures, quite long processing times, and the alkaline conditions, off-taste an off-flavours are formed. The storage stability of the end product is also limited.

WO 00/48474 A1 discloses milk replacers including fat, carbohydrates and different types of gluten which are blends of different gluten that have undergone different processing.

In CN1065977 (1992) an alternative method is described for producing a wheat milk. Thereby a wet wheat gluten composition is added to an aqueous medium containing a selection of organic acids including citric acid, lactic acid, ascorbic acid, and/or glucono-delta-lactone, or mixtures thereof, in order to obtain a dispersion containing 4-10% protein. This composition is violently mixed to prepare a suspension with relatively low surface tension. To this suspension vegetable oil is added and violently stirred for 5-15 minutes in order to obtain a stable emulsion. Then a proper amount of sugar(s) is added. This wheat milk composition has a pH of 5,0-5,2 and is heated and sterilised.
Also here the wheat milk product is directly prepared from a side stream of wheat flour processing. Here the wet gluten fraction is acidified in order to increase its dispersibility. Quite intense mixing is needed in order to obtain a homogenised composition. The product thereby obtained has a pH different from natural milk, and a reduced storage stability is observed. In both cases, limited storage stability is due to the high molecular weight of the protein fractions in wheat gluten, and of the low number of charges present in the protein backbones.

Use of modified wheat gluten as an alternative protein source in calf milk replacer formulations is widely known. EP446987 describes calf milk replacer compositions wherein at least part of the vegetable proteins consist of soluble wheat gluten. The soluble wheat gluten cited in this application were obtained by deamidation or by partial enzymatic hydrolysis of vital wheat gluten. EP934700 discloses a process for preparing calf milk replacer compositions wherein part of the proteins consist of a mixture of hydrolysed soya protein and hydrolysed wheat gluten. Also here the hydrolysed wheat gluten can be obtained by the processes cited above.
The modified wheat gluten used in calf milk replacers are always incorporated together with other vegetable and/or milk proteins in order to have a balanced amino acid composition in these CMR's. If necessary, essential amino acids can be added. CMR's containing only modified wheat gluten are not used. Special requirements, as in the case of consumer products, regarding organoleptic properties and storage stability are less relevant for CMR's.

In J. of Agricultural and Food Chemistry (1965) p.407-410, a method for preparing enzyme modified wheat gluten is disclosed. The method consists in an enzymatic hydrolysis using pepsin. These modified wheat gluten are used for preparing skimmed milk-like products which are composed of the modified wheat protein, a starch hydrolysate and a stabiliser. These ingredients are spray dried together using conditions whereby well dispersible compositions are obtained. The protein fraction was first neutralised to pH=6,5-6,6. The spray dried compositions are typically composed of about 30% protein, 70% carbohydrate and 0,7-1% stabiliser. The milk-like products prepared therewith contain about 13% d.s..
The milk-like products disclosed in this document contain no fat but still they need a quite substantial quantity of a stabiliser in order to keep the protein fraction in suspension. Thereby the protein hydrolysate was neutralised, thus increasing the salt content of the composition while at the same time reducing the solubility of the protein hydrolysate.

The different wheat protein based vegetable milk compositions cited above show a number of shortcomings mainly to their storage stability and consumer acceptability (flavour, taste, organoleptic properties), and also to their preparation. Thereby the applicant observed that all these shortcomings were related, in one or another way, to the nature of the wheat gluten proteins used in these compositions.

It is therefore a purpose of the present invention to provide suitable wheat protein compositions showing improved organoleptic properties and improved storage stability. It is also a purpose of the present invention to allow the preparation of wheat protein based vegetable milk compositions in a technically more feasible way.

The above cited problems have now been solved by the compositions of the invention. The invention provides a wheat based milk composition which comprises a carbohydrate source, a lipid fraction and a wheat protein fraction, characterised in that the wheat protein fraction is composed of:
- an enzyme modified wheat gluten_having a solubility of at least 55% NSI at pH 7 and a degree of hydrolysis between 1 and 4%,
- and a chemically deamidated wheat gluten_having a deamidation degree of at least 50%, a solubility of at least 85% NSI at pH 7, and a degree of hydrolysis lower than 0,5%, whereby the ratio of the enzyme modified wheat gluten over the deamidated wheat gluten is between 80/20 to 99/1, preferably between 90/10 and 96/4.

The deamidation degree was determined according to the method described in J. Agric. Food Chem. (1976) p.504-510. The NSI (Nitrogen Solubility Index) is measured according to AACC standard methods at pH=7. The degree of hydrolysis (DH) was determined with the Sorenson formol titration method.

The enzyme selected for performing the hydrolysis typically is an endoprotease acting at neutral or slightly alcaline pH, such as e.g. alcalase, corolase, proteinase T.

In a preferred embodiment the degree of hydrolysis of the first modified wheat gluten is from 1,5 to 2,5%. Typical examples of such modified wheat proteins are commercialised under the name of a.o. Meripro 500, Meripro 810, Gempro, GBS-P51, or Hyfoama.

The second modified wheat gluten is a chemically modified wheat gluten obtained by acid or alkaline deamidation, acid deamidation being preferred. Thereby the deamidation degree is at least 55%. Typical examples of such second modified wheat proteins are a.o. Meripro 711, or GemTec 300 and GemTec 1160.

The wheat based milk composition of the invention shows a clear improvement in stability. Furthermore the composition is pH neutral and therefore does not need additional treatment for adapting said pH.

The wheat based milk compositions of the invention contain between 5 and 15% dry matter. This dry matter comprises:
- a carbohydrate fraction representing 1,0-7%, preferably 2-4% by weight of the wheat milk composition,
- a lipid fraction representing 0,1-5%, preferably 1-2% by weight of the wheat milk composition,
- a protein fraction representing 1-5%, preferably 2-4% by weight of the wheat milk composition.

The carbohydrate fraction may contain sucrose, invert sugar, HFCS, glucose, fructose, or starch hydrolysates including maltodextrins, and mixtures thereof. Thereby it was found advantageous to combine a maltodextrin with one or more of the other carbohydrate sources.

The lipid fraction is selected among the wide range of vegetable oils, provided they do not induce off flavours. Thereby vegetable oils containing unsaturated or polyunsaturated fatty acids are preferred. Typical examples are rapeseed, sunflower, peanut, maize or sesame oil, or mixtures thereof.

Minor ingredients present in the wheat milk compositions of the invention include an emulsifier and a stabiliser composition, and further a flavouring agent. The emulsifier used typically has an HLB value varying between 8 and 15. Thereby preferably lecithin or a derivative thereof is used. The stabilisers used are selected among a series of hydrocolloids such as xanthan gum, carrageenan, gum acacia, guar gum, gellan gum or mixtures thereof. Suitable quantities of stabiliser used vary between 0,05 and 0,5% by weight of the milk composition. In a preferred embodiment xanthan gum is used in a quantity varying between 0,1 and 0,25% by weight of the milk composition.

The wheat based milk compositions of the invention can be flavoured from a selection of flavours including a.o. vanilla, cocoa, strawberry, orange, banana, as the more popular flavours.

This application further discloses a process for preparing wheat based milk compositions. Thereby the carbohydrate fraction, the stabiliser fraction and the protein fraction are mixed together and dissolved in water in a first mixing vat, and heated up. In a second mixing vat the lipid fraction, together with the emulsifier are mixed together and heated up. Finally both fractions are mixed together in the correct ratios and pressure homogenised, using pressures of between 50 and 300 bar, in a first stage and about 20 bar in a second stage. In a preferred embodiment, the pressure in the first stage is from 100 to 200 bar.

The homogenised wheat-based milk compositions are then pasteurised or submitted to an UHT-treatment. Homogenisation is typically performed by high pressure homogenisation equipment used in the dairy industry, but also mechanical homogenisation can be performed using e.g. Ultra Turrax or Ystral dispersing equipment.

The invention will now be further illustrated by the examples hereafter.

### Example 1:

This example describes the preparation of wheat-based milk compositions of the reduced fat milk type. The compositions thus obtained are evaluated organoleptically and for their stability against phase demixing over time. The compositon of the wheat-based milks is presented in table 1. The reference products Ref1 and Ref2 only contain enzyme modified wheat gluten and no chemically modified wheat gluten.

**Table 1: Compositon of wheat-based milks**

| Ingredients (g d.s./100 ml) | Comp1 | Comp2 | Ref1 | Ref2 |
|---|---|---|---|---|
| Wheat protein | 3,70 | 3,70 | 3,70 | 3,70 |
| Meripro 500 / Meripro 711 ratio | 96/4 | 96/4 | 100/0 | 100/0 |
| Carbohydrate | | | | |
| Sugar | 2,2 | 2,2 | 2,2 | 2,2 |
| Maltodextrin DE12 | 0 | 2 | 0 | 2 |
| Rapeseed oil | 1,4 | 1,4 | 1,4 | 1,4 |
| Xanthan gum | 0,2 | 0,2 | 0,2 | 0,2 |
| Lecithin | 0,08 | 0,08 | 0,08 | 0,08 |
| Flavour | 0,17 | 0,17 | 0,17 | 0,17 |
| Water | 92,25 | 90,25 | 92,25 | 90,25 |

Meripro 500 is an enzyme modified wheat gluten having a degree of hydrolysis of 1,5 to 2 and a solubility of at least 60% NSI at pH=7, commercialised by SYRAL SAS. Meripro 711 is a chemically modified wheat gluten having a deamidation degree of about 60% and a solubility of at least 90% NSI at pH=7, commercialised by SYRAL SAS.

The wheat-based milk compositions are prepared as follows:
In a first mixing vessel, protein, carbohydrate and stabiliser are dispersed in water and heated to about 70°C (phase 1). In a second mixing vessel oil is heated to 70°C and lecithin is added until homogeneous (phase 2). Then phase 2 is slowly added to phase 1 and mixed with an IKA blender until the temperature is below 60°C. This mixture is then pre-heated to 75°C and homogenised using a high pressure pump from Niro-Soavi using a two step homogenisation procedure. Homogenisation pressures used are 100 and 20 bar. The thus prepared compositions are pasteurised at 90°C and one part is stored at 6°C for 3 weeks. The second part is used for an organoleptic evaluation.

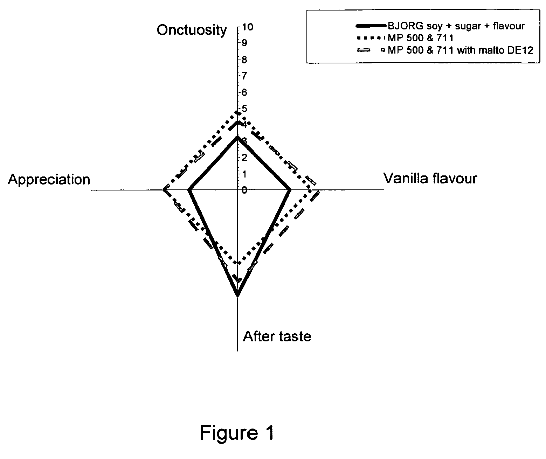

In the sensory analysis represented in Fig. 1 the products Comp1 and Comp2 were compared with a commercial soya drink which was sweetened and flavoured to a level equal to that of products Comp1 and Comp2.

The stability over time of the wheat based milk compositions is determined by measuring the aqueous supernatant formed during storage over 3 weeks. The wheat based milks were stored in 1 liter round flasks, which were filed to a height of about 12-13 cm. Stability was expressed as a function (X - Y)/X, whereby, X = the height of the milk composition in the recipient, and Y = height of the aqueous supernatant formed during storage over 3 weeks. Results are given in table 2.

**Table 2: Storage stability of wheat-based milks**

| Storage stability | Comp1 | Comp2 | Ref1 |
|---|---|---|---|
| (X-Y)/X | 0,88 | 0,88 | 0,72 |

The storage stability of the combined products enzyme modified and chemically modified wheat gluten (Comp1 and Comp2) is clearly better than the enzyme only modified wheat gluten product (Ref1). From these values it is clear that the combination of a first modified wheat gluten having a solubility of at least 60% NSI at pH 7 and a degree of hydrolysis between 1 and 4, and a second modified wheat gluten having a deamidation degree of at least 50%, a solubility of at least 90% NSI at pH 7, and a degree of hydrolysis lower than 0,5 provides a clear stability improvement over compositions containing only the enzyme modified wheat gluten.

### Example 2:

In this example wheat based milk compositions having varying protein ratios, varying protein content and varying lipid content are described. The wheat based milk compositions described in this example were prepared using the procedure disclosed in example 1. All formulations thus obtained were homogeneous and showed a milk-like appearance. The composition of the wheat-based milks is provided in table 3.

### Example 3:

As a comparative example, the enzymatically hydrolysed wheat gluten (Meripro 500) in example 1, was replaced by native wheat gluten and processed according to the procedure disclosed in example 1. The dispersions thus obtained were not stable and separated on standing.

### Example 4:

In this example, a wheat-based milk composition, containing the same ingredients as for composition 1 (Example 1) was prepared using a mechanical homogenisation step, thereby using an IKA high shear mixer. Homogenisation was performed for 10 minutes at 24000 rpm. The resulting composition was homogeneous and showed a milk-like appearance. There was no dephasing after 14 days.

**Table 3: Wheat-based milk compositions containing varying protein mix ratios, varying protein content and varying lipid content**

| Ingredients (g d.s./100 ml) | Comp3 | Comp4 | Comp5 | Comp6 | Comp7 | Comp8 | Comp9 | Comp10 |
|---|---|---|---|---|---|---|---|---|
| Wheat protein | 3,70 | 3,70 | 3,70 | 3,70 | 3,70 | 3,70 | **2,0** | **5,0** |
| Meripro 500 / Meripro 711 ratio | **99/1** | **93/7** | **80/20** | 96/4 | 96/4 | 96/4 | 96/4 | 96/4 |
| Carbohydrate | 2,2 | 2,2 | 2,2 | 2,2 | 2,2 | 2,2 | 2,2 | 2,2 |
| Rapeseed oil | 1,4 | 1,4 | 1,4 | **1,0** | **3,0** | **4,0** | 1,4 | 1,4 |
| Xanthan | 0,2 | 0,2 | 0,2 | 0,2 | 0,2 | 0,2 | 0,2 | 0,2 |
| Lecithin + flavour | 0,25 | 0,25 | 0,25 | 0,25 | 0,25 | 0,25 | 0,25 | 0,25 |
| Water | 92,25 | 92,25 | 92,25 | 92,65 | 90,65 | 89,65 | 93,95 | 90,95 |
| Stability (X - Y)/X | 0,9 | 0,95 | 0,97 | 0,9 | 0,85 | 0,81 | 0,88 | 0,89 |

## Claims

1. Wheat based milk composition which comprises a carbohydrate fraction, a lipid fraction and a wheat protein fraction, **characterised in that** the wheat protein fraction is composed of:
• an enzyme modified wheat gluten having a solubility of at least 55% NSI at pH 7 and a degree of hydrolysis between 1 and 4%,
• a chemically deamidated wheat gluten having a deamidation degree of at least 50%, a solubility of at least 85% NSI at pH 7, and a degree of hydrolysis lower than 0,5%, whereby the ratio of the enzyme modified wheat gluten over the deamidated wheat gluten is between 80/20 to 99/1, preferably between 90/10 and 96/4.

2. Wheat based milk composition according to claim 1, whereby the enzyme is an endoprotease acting at neutral or slightly alkaline pH, such as e.g. alcalase, corolase, proteinase T.

3. Wheat based milk composition according to claim 1 or 2, whereby the degree of hydrolysis of the enzyme modified wheat gluten is from 1,5 to 2,5%.

4. Wheat based milk composition according to any of the preceding claims, whereby the deamidated wheat gluten is obtained by alkaline deamidation or preferably by acid deamidation.

5. Wheat based milk composition according to claim 4, whereby the deamidation degree is at least 55%.

6. Wheat based milk composition according to any of claims 1 to 5, comprising between 5 and 15% dry matter.

7. Wheat based milk composition according to claim 6, whereby the dry matter comprises:
• a carbohydrate fraction representing 1,0-7%, preferably 2-4% by weight of the wheat milk composition,
• a lipid fraction representing 0,1-5%, preferably 1-2% by weight of the wheat milk composition, and
• a protein fraction representing 1-5%, preferably 2-4% by weight of the wheat milk composition.

8. Wheat based milk composition according to any of claims 1 to 7, whereby the carbohydrate fraction comprises sucrose, invert sugar, HFCS, glucose, fructose, or starch hydrolysates including maltodextrins, and mixtures thereof such as a maltodextrin with one or more of the other carbohydrate sources.

9. Wheat based milk composition according to any of claims 1 to 8, whereby the lipid fraction is selected among vegetable oils, preferably comprising unsatured or poly-unsaturated fatty acids.

10. Wheat based milk composition according to any of claims 1 to 9, further comprising an emulsifier, a stabiliser composition and a flavouring agent.

11. Method for preparing wheat based milk compositions of claims 1 to 10, said method comprising the steps of:
a. mixing the carbohydrate fraction, the stabiliser fraction and the protein fraction, dissolving in water and heating up,
b. mixing the lipid fraction together with the emulsifier and heating up,
c. mixing both fractions of step a and b in the correct ratios and homogenisation at a pressure of 50 to 300 bar, preferably 100 to 200 bar, in a first stage and 20 bar in a second stage.

12. Method of claim 11, further comprising the step of pasteurising or submitting to an UHT-treatment.

13. Use of a combination of an enzyme modified wheat gluten and a deamidated wheat gluten for improving the stability of a wheat based milk composition.

## Patentansprüche

1. Milchzusammensetzung auf Weizenbasis, umfassend eine Kohlenhydratfraktion, eine Lipidfraktion und eine Weizenproteinfraktion, **dadurch gekennzeichnet, dass** die Weizenproteinfraktion zusammengesetzt ist aus:
• einem enzymmodifizierten Weizengluten mit einer Löslichkeit von wenigstens 55 % NSI bei pH 7 und einem Hydrolysegrad zwischen 1 und 4 %,
• einem chemisch desaminierten Weizengluten mit einem Desaminierungsgrad von wenigstens 50 %, einer Löslichkeit von wenigstens 85 % NSI bei pH 7 und einem Hydrolysegrad von unter 0,5 %, wobei das Verhältnis des enzymmodifizierten Weizenglutens zu dem desaminierten Weizengluten zwischen 80/20 und 99/1, vorzugsweise zwischen 90/10 und 96/4, beträgt.

2. Milchzusammensetzung auf Weizenbasis gemäß Anspruch 1, wobei das Enzym eine Endoprotease ist, die bei neutralem oder leicht alkalischem pH-Wert wirkt, wie z. B. Alkalase, Corolase, Proteinase T.

3. Milchzusammensetzung auf Weizenbasis gemäß Anspruch 1 oder 2, wobei der Hydrolysegrad des enzymmodifizierten Weizenglutens von 1,5 bis 2,5 % beträgt.

4. Milchzusammensetzung auf Weizenbasis gemäß einem der vorstehenden Ansprüche, wobei das desaminierte Weizengluten durch alkalische Desaminierung oder vorzugsweise durch saure Desaminierung erhalten ist.

5. Milchzusammensetzung auf Weizenbasis gemäß Anspruch 4, wobei der Desaminierungsgrad wenigstens 55 % beträgt.

6. Milchzusammensetzung auf Weizenbasis gemäß einem der Ansprüche 1 bis 5, umfassend zwischen 5 und 15 % Trockensubstanz.

7. Milchzusammensetzung auf Weizenbasis gemäß Anspruch 6, wobei die Trockensubstanz umfasst:
• eine Kohlenhydratfraktion, die 1,0-7 Gew.-%, vorzugsweise 2-4 Gew.-%, der Weizenmilchzusammensetzung darstellt,
• eine Lipidfraktion, die 0,1-5 Gew.-%, vorzugsweise 1-2 Gew.-%, der Weizenmilchzusammensetzung darstellt, und
• eine Proteinfraktion, die 1-5 Gew.-%, vorzugsweise 2-4 Gew.-%, der Weizenmilchzusammensetzung darstellt.

8. Milchzusammensetzung auf Weizenbasis gemäß einem der Ansprüche 1 bis 7, wobei die Kohlenhydratfraktion Saccharose, Invertzucker, HFCS, Glucose, Fructose oder Stärkehydrolysate, einschließlich Maltodextrine, und Gemische davon, wie z. B. ein Maltodextrin mit einer oder mehreren der anderen Kohlenhydratquellen, umfasst.

9. Milchzusammensetzung auf Weizenbasis gemäß einem der Ansprüche 1 bis 8, wobei die Lipidfraktion aus pflanzlichen Ölen, vorzugsweise umfassend ungesättigte oder mehrfach ungesättigte Fettsäuren, ausgewählt ist.

10. Milchzusammensetzung auf Weizenbasis gemäß einem der Ansprüche 1 bis 9, ferner umfassend einen Emulgator, eine Stabilisatorzusammensetzung und einen Geschmacksstoff.

11. Verfahren zum Herstellen von Milchzusammensetzungen auf Weizenbasis gemäß Ansprüchen 1 bis 10, wobei das Verfahren die Schritte umfasst:
a. Mischen der Kohlenhydratfraktion, der Stabilisatorfraktion und der Proteinfraktion, Lösen in Wasser und Erwärmen,
b. Zusammenmischen der Lipidfraktion mit dem Emulgator und Erwärmen,
c. Mischen der beiden Fraktionen aus Schritt a und b in den richtigen Verhältnissen und Homogenisieren bei einem Druck von 50 bis 300 bar, vorzugsweise 100 bis 200 bar, in einem ersten Schritt und 20 bar in einem zweiten Schritt.

12. Verfahren gemäß Anspruch 11, ferner umfassend den Schritt des Pasteurisierens oder Unterwerfens an eine UHT-Behandlung.

13. Verwendung einer Kombination eines enzymmodifizierten Weizenglutens und eines desaminierten Weizenglutens zum Verbessern der Stabilität einer Milchzusammensetzung auf Weizenbasis.

## Revendications

1. Composition de lait à base de blé, qui comprend une fraction hydrate de carbone, une fraction lipidique et une fraction protéine de blé, **caractérisée en ce que** la fraction protéine de blé se compose :
• d'un gluten de blé modifié par enzyme de solubilité d'au moins 55 % NSI à pH 7 et de degré d'hydrolyse compris entre 1 et 4 %,
• d'un gluten de blé désamidé chimiquement de degré de désamidation d'au moins 50 %, de solubilité d'au moins 85 % NSI à pH 7, et de degré d'hydrolyse inférieur à 0,5 %, où le rapport du gluten de blé modifié par enzyme sur le gluten de blé désamidé est compris entre 80/20 et 99/1, préférentiellement entre 90/10 et 96/4.

2. Composition de lait à base de blé selon la revendication 1, où l'enzyme est une endoprotéase agissant à pH neutre ou légèrement basique, telle que par exemple alcalase, corolase, protéinase T.

3. Composition de lait à base de blé selon la revendication 1 ou 2, où le degré d'hydrolyse du gluten de blé modifié par enzyme est compris entre 1,5 et 2,5%.

4. Composition de lait à base de blé selon l'une quelconque des revendications précédentes, où le gluten de blé désamidé est obtenu par désamidation basique ou préférentiellement par désamidation acide.

5. Composition de lait à base de blé selon la revendication 4, où le degré de désamidation est d'au moins 55 %.

6. Composition de lait à base de blé selon l'une quelconque des revendications 1 à 5, comprenant entre 5 et 15 % de matière sèche.

7. Composition de lait à base de blé selon la revendication 6, où la matière sèche comprend :
• une fraction hydrate de carbone représentant 1,0 à 7 %, préférentiellement 2 à 4 % en masse de la composition de lait à base de blé,
• une fraction lipidique représentant 0,1 à 5 %, préférentiellement 1 à 2 % en masse de la composition de lait à base de blé, et
• une fraction protéine représentant 1 à 5 %, préférentiellement 2 à 4 % en masse de la composition de lait à base de blé.

8. Composition de lait à base de blé selon l'une quelconque des revendications 1 à 7, où la fraction hydrate de carbone comprend du sucrose, du sucre inverti, du sirop de maïs à haute teneur en fructose, du glucose, du fructose ou des hydrolysats d'amidon incluant des maltodextrines, et des mélanges de ceux-ci tels qu'une maltodextrine avec une ou plusieurs des autres sources d'hydrates de carbone.

9. Composition de lait à base de blé selon l'une quelconque des revendications 1 à 8, où la fraction lipidique est choisie parmi les huiles végétales, préférentiellement comprenant des acides gras insaturés ou poly-insaturés.

10. Composition de lait à base de blé selon l'une quelconque des revendications 1 à 9, comprenant en outre un émulsifiant, une composition de stabilisant et un arôme.

11. Procédé d'élaboration de compositions de lait à base de blé selon les revendications 1 à 10, ledit procédé comprenant les étapes suivantes :
a. mélangeage de la fraction hydrate de carbone, de la fraction stabilisante et de la fraction protéine, dissolution dans l'eau et chauffage,
b. mélangeage de la fraction lipidique avec l'émulsifiant et chauffage,
c. mélangeage des deux fractions des étapes a et b dans les bons rapports et homogénéisation à une pression de 50 à 300 bars, préférentiellement de 100 à 200 bars, dans une première étape, et 20 bars dans une deuxième étape.

12. Procédé selon la revendication 11, comprenant en outre l'étape de pasteurisation ou de soumission à un traitement UHT.

13. Utilisation d'une combinaison d'un gluten de blé modifié par enzyme et d'un gluten de blé désamidé pour améliorer la stabilité d'une composition de lait à base de blé.
